# EUROPÄISCHE PATENTSCHRIFT

(11) **EP 2 460 746 B1**
(45) Veröffentlichungstag und Bekanntmachung des Hinweises auf die Patenterteilung: **02.03.2016**
(21) Anmeldenummer: 11009167.5
(22) Anmeldetag: 18.11.2011
(51) Int. Cl.: B65G 29/00, B65G 47/84, B67C 3/24

(54) **Fördervorrichtung für Behältnisse**
Conveyor device for containers
Dispositif de transport pour récipients

(30) Priorität: 04.12.2010 DE 102010053476
(43) Veröffentlichungstag der Anmeldung: 06.06.2012
(73) Patentinhaber: Krones AG, 93073 Neutraubling (DE)
(72) Erfinder: Winzinger, Frank, 93049 Regensburg (DE)

(56) Entgegenhaltungen:
- EP-A1- 2 133 292
- EP-A1- 2 186 759
- WO-A1-2006/077050
- CH-A5- 678 616
- DE-A1- 10 234 374
- DE-A1-102007 057 965
- FR-A1- 2 766 166
- US-A- 2 349 638

## Beschreibung

Die Erfindung betrifft eine Fördervorrichtung, eine Förderanlage und ein Verfahren zum Umstellen einer Fördervorrichtung gemäß dem Oberbegriff der Patentansprüche 1, 11 und 12.

Behältnisbehandlungs- oder Fördervorrichtungen wie Transportsterne, Flaschenfüller, Blasmaschinen oder dergleichen, die Behältnisse innerhalb einer Abfüllanlage im Neckhandling transportieren, weisen im Stand der Technik fest mit den umlaufenden Förderern verbundene Aufnahmen zum Transport der Behältnisse auf, die bei einem Formatwechsel der zu behandelnden Behältnisse ausgetauscht werden müssen, Dieser Austausch ist nötig, da die auf der Fördervorrichtung angebrachten Aufnahmen, welche die Behältnisse meistens am Mündungsbereich greifen, nur für einen gewissen Toleranzbereich an Durchmessern dieses Mündungsbereichs geeignet sind. Wenn auf einer Abfüllanlage mehrere verschiedene Behältnisse abgefüllt werden, ist daher ein manueller Austausch dieser sogenannten Garnituren (Klammern, Aufnahmedorne, Heizdorne und dergleichen) schon bei wenigen Millimetern Durchmesserunterschied der Behältnisse nötig. Auch ist es nötig, bei einem frühzeitigen Verschleiß, die Garnituren manuell auszuwechseln.

Aus der DE102008029711A1 ist ein System zu einem Schnellwechsel dieser Garnituren bekannt, wobei aber immer noch ein manueller Eingriff des Bedieners nötig ist.

Aus der WO2009103435A1 ist eine Abfüllanlage bekannt, bei der der Formatwechsel mittels Verstellung von Führungsgarnituren über motorische Antriebe stattfinden kann. Hier wird jedoch nicht auf Fördereinrichtungen eingegangen, die die Behältnisse vereinzelt greifen.

Der aus der DE102006033511A1 bekannte Transportstern besitzt in der Förderebene zwei unterschiedliche Greifer und kann durch Weiterdrehen einer halben Teilung auf ein anderes Format umgestellt werden. Nachteilig hieran ist der benötigte Platz am Umfang des Förderers, da an diesem mindestens zwei volle Sätze der jeweiligen Garnituren angebracht werden müssen.

Die Druckschrift DE 102 34 374 A1 offenbart eine gattungsgemäße Fördervorrichtung für Flaschen, an der eine Vielzahl von Halteelementen angeordnet ist. Eine Umstellung der Halteelemente in eine andere Ebene erfolgt durch Drehung des Halteelements um eine Achse, welche senkrecht auf die Drehachse des Förderers steht. Die Umstellung dient dem Wenden der zu transportierenden Flaschen.

Der Erfindung liegt die Aufgabe zugrunde, die Flexibilität einer Fördervorrichtung der eingangs genannten Art zu verbessern.

Die gestellte Aufgabe wird mit den Merkmalen der Patentansprüche 1, 11 und 12 gelöst.

Bei der erfindungsgemäßen Fördervorrichtung für Behältnisse sind mindestens zwei Aufnahmen vorgesehen, die an der Fördervorrichtung angeordnet sind und die in einer auf eine Transport- oder Förderebene der Behältnisse senkrecht stehenden Richtung beabstandet zueinander angeordnet sind. Dabei ist jede der Aufnahmen auf ein geometrisches Merkmal der aufzunehmenden Behältnisse ausgelegt und mindestens eine der Aufnahmen in eine Förderebene der Behältnisse umstellbar. Die Aufnahmen sind dazu geeignet, Behältnisse entlang eines vorgegebenen Transportpfads zu transportieren.

Bei dem geometrischen Merkmal handelt es sich insbesondere um einen Durchmesser, den die Behältnisse im Bereich einer Mündung in der Nähe eines offenen Endes aufweisen, es kann sich aber auch um einen Durchmesser im Bereich des Körpers der Behältnisse oder um eine Höhe, beispielsweise eine Mündungshöhe (von einem oberen Rand bis zu einem Tragring) oder die Gesamthöhe (vom Boden bis zum oberen Rand) oder dergleichen handeln.

Der Transportpfad innerhalb der Fördervorrichtung kann sich bereichsweise bogenförmig, linear oder je nach Fördervorrichtung und Lagerung der Aufnahme auch nach bestimmten geometrischen Funktionen erstrecken.

Bei mehreren, in Transportrichtung der Behältnisse gesehen, hintereinander angeordneten, rundlaufenden Fördervorrichtungen, bei der die Behältnisse von einer ersten zu einer benachbarten Fördervorrichtung übergeben werden, ist der Transportpfad beispielsweise im Wesentlichen mäanderförmig. Die Mäanderform entsteht dabei durch den nur teilweisen Umlauf auf den Fördervorrichtungen und der tangentialen Übergabe bzw. -nahmen an bzw. von den benachbarten Fördervorrichtungen.

Unter Umstellung (bzw. umstellbar) wird allgemein eine Änderung der Position verstanden, mit anderen Worten also eine Verstellung in eine andere geometrische Lage. Insbesondere wird bei der Umstellung eine Aufnahme linear bewegt. Insbesondere erfolgt bei einer horizontalen Transport- bzw. Förderebene die Umstellung in der vertikalen Richtung.

Durch die Umstellung mindestens einer der Aufnahmen in die Förderebene kann diese an die Stelle der anderen Aufnahme treten und in der Förderebene Behältnisse transportieren. Insbesondere befindet sich die zweite Aufnahme nach der Umstellung der ersten Aufnahme nicht mehr in der Förderebene, in der sie zuvor angeordnet war und kann insbesondere "leer" an einer anderen Position mitlaufen. Ein Auskuppeln der nicht in der Förderebene befindlichen Aufnahme mittels an der Aufnahme angeordneten Rastmitteln oder in Verbindung mit der Aufnahme stehenden Teilen (z.B. einer Transportsternscheibe) wäre auch denkbar. So wäre eine der Aufnahmen zumindest zeitweise nicht mehr drehfest an der Fördervorrichtung angeordnet.

Eine andere Möglichkeit ist, die zweite Aufnahme in der Förderebene fest anzuordnen und die erste Aufnahme nach der Umstellung in die Förderebene an oder im Bereich der zweiten Aufnahme anzuordnen. Dies ist insbesondere möglich, wenn die zweite Aufnahme andere Dimensionen aufweist als die erste Aufnahme. Sollte es sich bei den Aufnahmen um Greifklammern handeln, die das Behältnis von außen mittels zwei, vorzugsweise beweglichen Greifklauen greifen, so wäre es denkbar, die größere Klammer fest in der Förderebene bzw. Greifebene anzuordnen und die kleinere Klammer zwischen zwei Greifarme der größeren Klammer umzustellen. Hier wäre es von Vorteil, wenn ein genügend großer Durchmesserunterschied der zu greifenden Behältnisse vorliegt, so dass für die zustellbare, kleinere Klammer noch genügend Platz zwischen einer Greiffläche der größeren Klammer und dem Behältnis zur Verfügung steht. Bei Aufnahmen wie Innengreifern bzw. Heizdornen ist es denkbar, im Falle eines nicht umstellbaren, an der Fördervorrichtung angeordneten, zweiten Innendorns diesen im Durchmesser kleiner auszuführen als den zustellbaren, ersten Dorn. Der größere Dorn ist insbesondere hülsenförmig ausgebildet und, den kleineren Innendorn haubenartig umschließend, in die Förderebene zustellbar.

Bei der Fördervorrichtung handelt es üblicherweise um einen rundlaufenden Transportstern, an dessen Umfang eine Vielzahl von ersten Aufnahmen und eine Vielzahl von zweiten Aufnahmen angeordnet sind. Insbesondere sind die Aufnahmen am Umfang der Fördervorrichtung gleichmäßig verteilt. Die zweiten Aufnahmen sind insbesondere von den ersten Aufnahmen alle im senkrecht gegenüber der Förderebene gleichen Abstand angeordnet und können bei Bedarf über einen Antrieb umgestellt werden. Es wäre aber auch denkbar, die Umstellung manuell durchzuführen und die Mittel zur Umstellung der Aufnahmen mit einer Rastung zu versehen, so dass vom Bedienpersonal keine Einstellarbeiten zu verrichten sind. Insbesondere ist die Förderebene horizontal angeordnet und die Umstellung mindestens einer Aufnahme bzw. Aufnahmeeinheit erfolgt in einer im Wesentlichen vertikalen Richtung, also senkrecht dazu. Durch eine lineare Umstellung in der vertikalen Richtung kann bei einem Förderer im Gegensatz zu einer drehenden Umstellung Bauraum eingespart werden bzw. können bei einem vorgegebenen Durchmesser des Förderers mehr Aufnahmen nebeneinander angeordnet werden.

Bei einem Transportstern werden die Behälter von den Aufnahmen zumindest zeitweise kontaktiert, insbesondere nur während eines nicht vollständigen Umlaufs des Transportsterns. Das heißt, dass die Behälter insbesondere schon nach 90° bis 330° eines Umlaufs wieder an eine weitere Fördervorrichtung abgegeben werden.

Insbesondere werden die Behältnisse von den Aufnahmen vereinzelt gefördert.

Die Fördervorrichtung beziehungsweise der Antrieb der Fördervorrichtung, ist insbesondere zu einer kontinuierlichen Betriebsweise ausgelegt, könnte aber auch taktweise betrieben werden.

Eine besonders einfache Umstellung einer Aufnahme in die Förderebene kann automatisch mittels eines Antriebs durchgeführt werden, welcher im Bereich der Fördervorrichtung angeordnet ist. Dabei kann insbesondere ein elektrischer Antrieb, zum Beispiel ein Servomotor oder ein Linearmotor eingesetzt werden. Ein mechanischer Antrieb, insbesondere eine von einem weiteren Antrieb zustellbare Steuerkurve, oder ein Fluidantrieb, insbesondere ein Pneumatik- oder Hydraulikzylinder, wären hierfür ebenfalls denkbar.

Ein modularer Aufbau wird dadurch unterstützt, dass die mindestens eine erste Aufnahme mindestens einer von den zweiten Aufnahmen zugeordnet ist und die mindestens zwei Aufnahmen eine Aufnahmeeinheit bilden. Insbesondere besteht eine Aufnahmeeinheit aus zwei Aufnahmen unterschiedlichen Typs, welche einen Abstand zueinander senkrecht zur Förderebene aufweisen. Ebenfalls ist es denkbar, dass eine Aufnahmeeinheit eine Schnittstelle aufweist, um weitere Aufnahmen der Aufnahmeeinheit nachträglich hinzufügen zu können. Die Schnittstelle besteht beispielsweise nur aus einem Bohrbild mit zusätzlicher Passung, um neue Aufnahmen ohne Entfernen der bestehenden Aufnahmeeinheit zu ermöglichen. Insbesondere ist eine Aufnahmeeinheit als Ganzes gegen eine andere austauschbar. Hier können auch Schnellverschlüsse zwischen Aufnahmeeinheiten und Fördervorrichtung vorgesehen sein, um ein schnelles und insbesondere manuelles Austauschen einer Aufnahmeeinheit zu gewährleisten.

Besonders vorteilhaft ist es, wenn jede einzelne Aufnahmeeinheit oder sogar jede einzelne Aufnahme einen individuellen Antrieb zur Umstellung aufweist. Die Antriebe können dann auch versetzt, insbesondere höhenversetzt oder im Durchmesser versetzt, zueinander angeordnet sein, wenn mehrere Antriebe nebeneinander angeordnet werden sollen. Denkbar wäre aber auch, dass der Antrieb zur Umstellung mindestens einer Aufnahme die ganze Fördervorrichtung, oder sogar mehrere Fördervorrichtungen umstellt.

Bei den Aufnahmen kann es sich um passive oder bevorzugt aktive Greifelemente handeln, die das Behältnis im Bereich des Mündungsdurchmessers von außen mittels Klammern greifen, wie sie beispielsweise aus der EP 1930259 A1, der EP1868746 A2 oder der EP 0795500 A2 bekannt sind. Aber auch Innengreifer, wie sie aus der EP1332037 A2 bekannt sind, können hier zum Einsatz kommen. Ebenso können die Aufnahmen an einer Fördereinrichtung angeordnet sein, bei der neben dem Transport der Behältnisse eine zusätzliche Behandlung durchgeführt wird. Hier wäre beispielsweise ein Erhitzen, ein Sterilisieren, ein Etikettieren, ein Füllen, eine Beschichtung, ein Expandieren, ein Reinigen, ein Kühlen, ein Schneiden mittels Laser oder Messer der Behältnisse oder dergleichen denkbar.

Bei den Behältnissen kann es sich um fertige Glasflaschen, PET-Flaschen, Vorformlinge, die zu PET-Flaschen aufgeblasen werden, Beutel oder andere Behältnisse handeln, die als Verpackung von Lebensmitteln oder anderen flüssigen Gütern, wie beispielsweise Öl, dienen.

Ein Einsatz der Erfindung ist grundsätzlich auch für Fördervorrichtungen für Behältnisse, wie Lufttransporteure, magnetische Linearförderer, Förderketten, Förderbänder oder dergleichen denkbar.

Es wäre auch denkbar, dass an einer Fördervorrichtung zwei oder mehrere erste Aufnahmen einer zweiten Aufnahme zugeordnet sind. Dies hat insbesondere den Vorteil, die Abfüllanlage mit einer geringeren Leistung (Ausstoß von Flaschen pro Stunde) betreiben oder die Fördervorrichtung an unterschiedliche Teilungsabstände anpassen zu können, was bei sehr großen Behältnisdurchmesserunterschieden im Körperbereich unterhalb der Mündung auftreten kann. So könnten die Abstände, mit denen die einzelnen Behälter durch die Abfüllanlage transportiert werden, variiert werden. Beispielsweise würden Behältnisse von ersten Aufnahmen mit einem Durchmesser von 120 mm in einem Abstand von 130mm - gesehen von den jeweiligen Längsachsen der Behältnisse zueinander - und Behältnisse von zweiten Aufnahmen mit einem Durchmesser von 60 mm in einem Abstand von 70 mm durch die Abfüllanlage transportiert werden können. Auf diese Weise könnte auch ein Abstand von Vorformlingen, die durch einen Ofen einer Blasmaschine transportiert werden, verändert werden. Bei Letzteren ist hauptsächlich der Behältnisdurchmesserunterschied im Mündungsbereich ausschlaggebend, da Vorformlinge normalerweise den größten Durchmesser im Bereich der Mündung beziehungsweise des Tragrings aufweisen.

Die mindestens eine erste und die mindestens eine zweite Aufnahme der erfindungsgemäßen Fördervorrichtung weisen insbesondere unterschiedliche (Aufnahme-)durchmesser auf. Dabei wird unter dem Aufnahmedurchmesser der doppelte Abstand von einer Längsachse des Behältnisses zu einem Kontaktpunkt der Aufnahme an der Wandung des Behältnisses verstanden, welcher Abstand in einem geschlossenen beziehungsweise einem Behältnis transportierenden Zustand der Aufnahme vorliegt. Bei einer Formatumstellung der Abfüllanlage auf ein Behältnis mit anderem Außendurchmesser, an dem es gegriffen und transportiert werden soll, können so durch Umstellung der Anordnung die Aufnahmen in der Förderebene "ausgetauscht" werden.

Insbesondere ist es möglich, neben der ersten und der zweiten Aufnahme auch eine dritte, vierte oder beliebig viele Aufnahmen gleichen oder unterschiedlichen Aufnahmedurchmessers (bzw. geometrischer Merkmale) in einer Aufnahmeeinheit vorzusehen.

Eine Umstellung der Aufnahmen erfolgt normalerweise außerhalb des Betriebs der Abfüllanlage, das heißt, wenn keine Behälter durch die Abfüllanlage befördert werden. Es wäre aber auch denkbar, eine Umstellung der Aufnahmen während des Betriebs durchzuführen, Dies trifft insbesondere auf Anlagen zu, in denen in einem Produktionsdurchlauf zwei unterschiedliche Behälter behandelt und/oder zwei unterschiedliche Produkte abgefüllt werden. Hier kann mit dem Antrieb der Umstelleinrichtung der Aufnahmen eine Steuerung verbunden werden, die je nach benötigter Aufnahme den Antrieb so steuert, dass die passende Aufnahme in Eingriff mit dem zu behandelnden, beziehungsweise dem zu fördernden Behältnis kommt. Die Signale zur Steuerung der Umstelleinrichtung können von einer intelligenten Maschinensteuerung bereitgestellt werden, die die Position der jeweiligen Behältnisse in der Abfüllanlage den jeweiligen Positionen an der Fördervorrichtung zuordnet oder durch einen in Transportrichtung vor der Fördervorrichtung angeordneten Sensor, der die Art (das behältnisspezifische oder geometrische Merkmal) der zu fördernden Behältnisse erkennt. Insbesondere ist die Steuerungseinrichtung dazu geeignet, die Antriebe von mehreren Fördervorrichtungen und/oder die Antriebe zur Umstellung mindestens zweier Aufnahmen an der gleichen oder an benachbarten Fördervorrichtungen aufeinander zu synchronisieren.

Wie schon erwähnt können an der Fördervorrichtung aktive Greifer angeordnet sein, welche beispielsweise aus der EP 1930259 A1 bekannt sind. Zur Betätigung der aktiven Greifer sind normalerweise entlang des Transportpfades eine oder mehrere feststehende Betätigungseinrichtungen, insbesondere Steuerkurven oder -nocken, vorgesehen, an denen einzelnen Aufnahmen zugeordnete Kurvenfolger ablaufen. Durch dieses Zusammenwirken wird ein aktives Greifen der Behältnisse ermöglicht. Bei einer Umstellung einer Aufnahme oder Aufnahmeeinheit in die Förderebene kann es nötig sein, ebenfalls die Betätigungseinrichtung zu verstellen.

Allgemein kann die Betätigungsvorrichtung separat oder gemeinsam mit mindestens einer Aufnahme über einen Antrieb umstellbar sein.

Die Betätigungsvorrichtung ist insbesondere über einen Antrieb mitverstellbar. Dieser Antrieb kann entweder derselbe sein, wie er zur Umstellung der Aufnahmen verwendet wird oder ein separater, der Betätigungseinrichtung zugeordneter Antrieb. Insbesondere eignet sich eine Umstellung der Betätigungseinrichtung, wenn allen ersten Aufnahmen und allen zweiten Aufnahme eine eigene Betätigungseinrichtung zugeordnet ist.

Ein besonders einfacher Aufbau wird dadurch unterstützt, dass mindestens eine erste und mindestens eine zweite Aufnahme von der selben Betätigungseinrichtung betätigbar sind, beziehungsweise der selben Betätigungseinrichtung zugeordnet sind. In einer vorteilhaften Ausführungsform ist diese Betätigungseinrichtung stationär und wirkt mit beiden Aufnahmen zusammen.

Weiterhin ist daran gedacht, bei einer Umstellung einer Aufnahme ebenfalls Sensoren, Inertisierungsvorrichtungen, Behälterauswurfeinrichtungen, Absenksterne, Sägezahnsterne bzw. Einteilsterne an Verschließern oder am Einlauf in einen Ofen einer Blasmaschine, komplette Verschließer, Behältertrocknungseinrichtungen wie Abblasungen vor Etikettiermaschinen, Heizstrahler in Öfen, Abschirmungseinrichtungen für bestimmte Bereiche von Behältern, insbesondere Vorformlingen, bei Erwärmungsvorgängen, Aufschäumungseinrichtungen zum Aufschäumen von Produkten (z.B. Düsen) oder Verschlusszuführungen umzustellen. Bei den Sensoren kann es sich dabei um Temperatursensoren, Sensoren für die Restflüssigkeitserkennung, Feuchtigkeitssensoren, Drucksensoren, oder Initiatoren, die ein Vorhandensein eines Behälters erkennen, handeln.

Die vorliegende Erfindung betrifft weiterhin ein Verfahren zum Umstellen einer Fördervorrichtung für Behältnisse mit mindestens einer ersten Aufnahme zum Transport von einem ersten Behältnis und mindestens einer zweiten Aufnahme zum Transport von einem zweiten Behältnis dadurch gekennzeichnet, dass die erste Aufnahme bereichsweise und zumindest zeitweise einen Abstand zur zweiten Aufnahme in einer zu einer Förderebene der Behältnisse senkrecht stehenden Richtung aufweist und die erste Aufnahme in die mindestens eine Förderebene zum Transport der Behältnisse in die Förderebene umgestellt wird.

Insbesondere wird die Umstellung der mindestens ersten Aufnahme oder mindestens einer Aufnahmeeinheit derart gesteuert, dass während des Betriebs der Abfüllanlage wahlweise oder wechselweise eine der beiden Aufnahmen Behältnisse fördert.

Insbesondere werden durch mindestens einen Antrieb zum Umstellen mehrere erste Aufnahmen gleichzeitig oder während eines Umlaufs der Fördervorrichtung kurz nacheinander umgestellt.

Das Verfahren lässt sich insbesondere bei einem umlaufenden Sternförderer durchführen, an dessen Umfang eine Vielzahl von ersten Aufnahmen und zweiten Aufnahmen angebracht sind, wovon mindestens eine Aufnahme Behälter aufnimmt und transportiert.

Ausführungsformen des Erfindungsgegenstandes werden anhand der Zeichnungen beschrieben. Es zeigen:
- Fig. 1: eine Draufsicht einer Fördervorrichtung gemäß dem Stand der Technik,
- Fig. 2: eine Schnittansicht der Figur 1,
- Fig. 3: eine weitere Ausführungsform gemäß Stand der Technik,
- Fig. 4: eine Draufsicht einer erfindungsgemäßen Vorrichtung,
- Fig. 5: eine Schnittansicht der Figur 4,
- Fig. 6: eine Schnittansicht einer weiteren Ausführungsform,
- Fig. 7: eine Draufsicht der Figur 6,
- Fig. 8: eine Schnittansicht einer weiteren Ausführungsform,
- Fig. 9: eine Detaildarstellung einer Klammer der Figur 8,
- Fig. 10: eine Schnittansicht eines Teils einer Abfüllanlage mit einer weiteren Ausführungsform der Erfindung,
- Fig. 11: eine Schnittansicht eines Teils einer Abfüllanlage mit einer weiteren Ausführungsform der Erfindung,
- Fig. 12: eine Schnittansicht eines Teils einer Abfüllanlage mit einer Behälterkühlung,
- Fig. 13: eine Draufsicht einer weiteren erfindungsgemäßen Ausführungsform,
- Fig. 14: eine Schnittansicht der Figur 13,
- Fig. 15: eine Draufsicht einer weiteren erfindungsgemäßen Ausführungsform,
- Fig. 16: eine Schnittansicht der Figur 15,
- Fig. 17: eine Schnittansicht einer abgewandelten Ausführungsform zu Figur 16,
- Fig. 18: eine Draufsicht einer weiteren erfindungsgemäßen Ausführungsform,
- Fig. 19: eine Schnittansicht der Figur 18,
- Fig. 20: eine Draufsicht einer weiteren erfindungsgemäßen Ausführungsform,
- Fig. 21: eine Schnittansicht der Figur 20,
- Fig. 22: eine Schnittansicht einer abgewandelten Ausführungsform zu Figur 20,
- Fig. 23: eine Schnittansicht einer Ausführungsform eines Förderers gemäß Figur 21 oder 22,
- Fig. 24: eine schematische Draufsicht auf eine erfindungsgemäße Abfüllanlage,
- Fig. 25: eine Schnittansicht einer weiteren erfindungsgemäßen Ausführungsform.

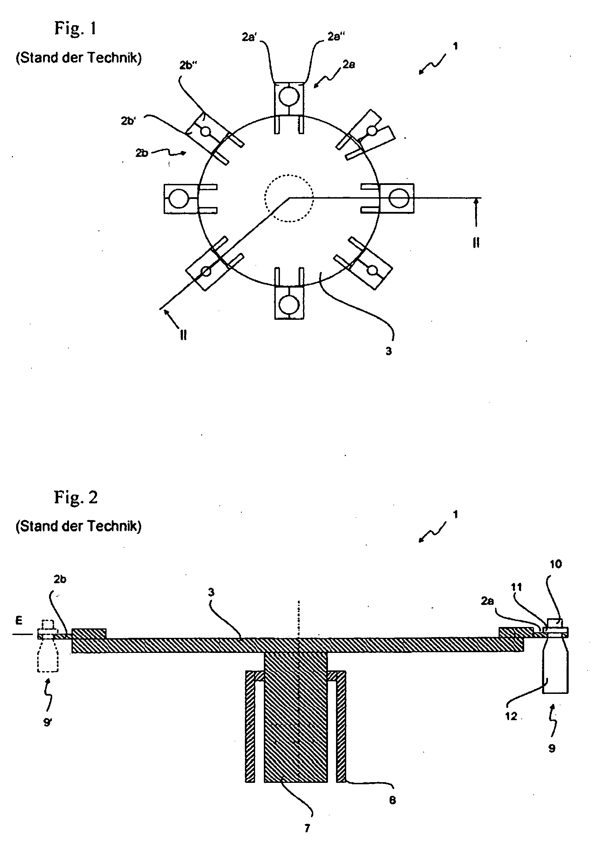

Fig. 1 zeigt eine Draufsicht einer Fördervorrichtung gemäß dem Stand der Technik (DE102006033511A1). Hierbei handelt es sich um eine als umlaufenden Sternförderer (Transportstern) ausgebildete Fördervorrichtung 1 mit einer Transportsternscheibe 3, an deren Umfang eine Vielzahl zweier unterschiedlicher Garnituren 2a, 2b zur Aufnahme von Behältnissen mit unterschiedlich großem Aufnahmedurchmesser angebracht ist. Die Klammerklauen 2a' und 2a" eigenen sich hierbei zur Aufnahme von im Aufnahmedurchmesser größeren Behältern 9 als die Klammerklauen 2b' und 2b''.

In der Schnittdarstellung II-II hierzu ist aus Figur 2 ersichtlich, dass die Transportsternscheibe 3 an einer drehend angetriebenen Sternsäule 7 angeordnet ist, welche in einem feststehenden Lagergehäuse 8 angeordnet ist. Die Klammern 2a haben ein Behältnis 9 unterhalb eines Tragrings 11 und oberhalb des bauchigen Körpers 12 aufgenommen. In der Nähe und oberhalb des Tragrings 11 befindet sich der Mündungsbereich 10, der sich vom Tragringbereich über einen Sicherungsring für Verschlüsse, ein Verschlussgewinde bis zu einem oberen Rand des Behältnisses 9 erstreckt. Auf der linken Seite der Zeichnung ist gestrichelt ein kleineres Behältnis 9' angedeutet, welches nach einer Umstellung der Fördervorrichtung von den Klammern 2b aufgenommen werden kann. Ebenfalls ist die Förderebene E zu sehen, die sich im Bereich der Klammern 2 - bzw. des Behälters in der Nähe des Tragrings 11 - befindet, welche die Behälter 9 fördern. Allgemein ist die Förderebene E durch den Bereich definiert, in dem die Fördervorrichtung 1, bzw. die Aufnahme 2, die Behältnisse 9 kontaktiert.

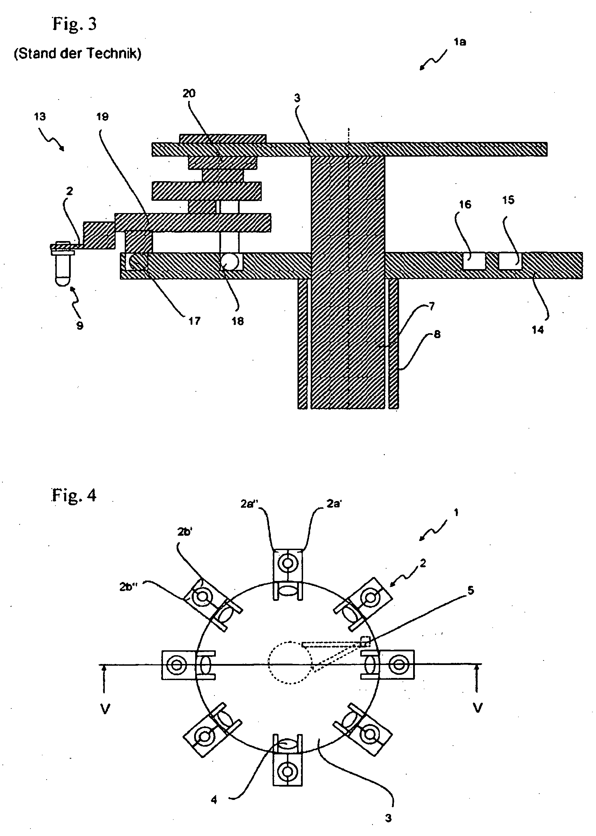

Figur 3 zeigt eine Fördervorrichtung la zum Transport von Vorformlingen 9 innerhalb einer Blasmaschine bzw. Streckblasmaschine gemäß dem Stand der Technik. Hier ist zur Veränderung eines Teilungsabstandes der Vorformlinge 9 die Klammer 2 nicht direkt an der Transportsternscheibe 3 angeordnet, sondern an einem Schwenkarm 13, welcher einen über ein Linearlager teleskopartig ausfahrbaren Arm 19 und ein Drehlager 20 zum Teilungsverzug bereitstellt. Der Arm 19 ist über eine Führungsrolle (Schieberrolle) 17 in einer Nut 15 einer feststehenden Kurvenscheibe 14 gelagert. Das Drehlager 20 ist mittels einer zweiten Drehrolle 18 über einen Hebel in einer zweiten Nut 16 drehbar gelagert. Durch das Zusammenspiel der beiden Lager 19, 20 ist der Abstand der Vorformlinge entlang des im Wesentlichen kreisförmigen Transportpfads veränderbar.

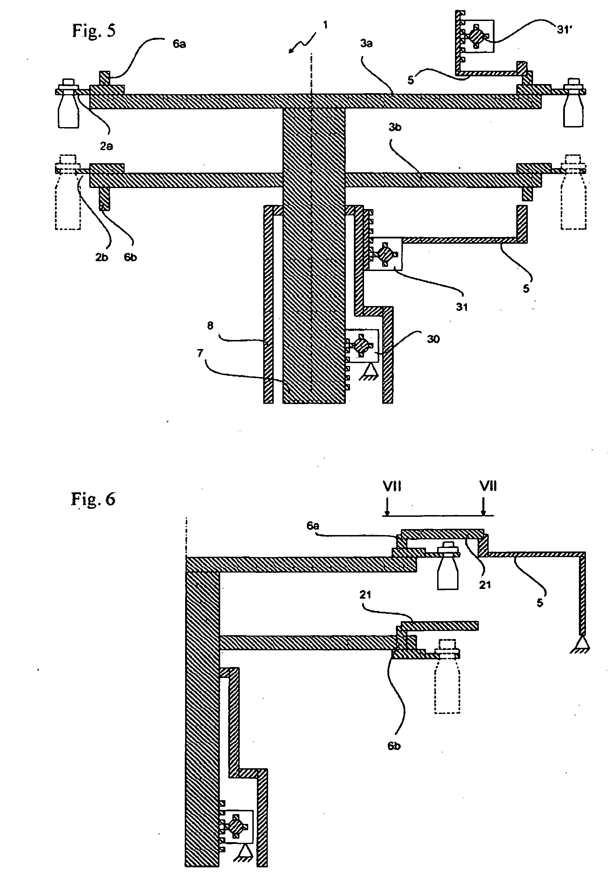

Figur 4 zeigt eine Draufsicht einer erfindungsgemäßen Fördervorrichtung 1. Ebenfalls wird im Folgenden Bezug auf Figur 5 genommen, eine Schnittansicht V-V der Figur 4. Der Grundaufbau einer Transportsternscheibe und den Aufnahmen ist grundsätzlich der gleiche, wie der aus den Figuren 1 bzw. 2. Hier sind ebenfalls eine Vielzahl von Aufnahmen bzw. Klammern 2a, 2b am Umfang einer Transportsternscheibe 3 angebracht.

Im Gegensatz zu den Figuren 1 bis 3 befinden sich hier die Klammern eines ersten Durchmessers 2a in einer anderen Ebene als die Klammern eines zweiten Durchmessers 2b. Die zwei unterschiedlichen Klammertypen 2a, 2b sind jeweils auf zwei höhenversetzten Transportsternscheiben 3a, 3b angeordnet. Diese Figur zeigt die Einstellung, bei der die Klammern 2a Flaschen 9 eines ersten, kleineren Durchmessers transportieren. Die Klammern 2b drehen sich auf der Transportsternscheibe 3b mit, ohne Behälter zu transportieren.

Bei Bedarf kann die Transportsternscheibe 3b in die Förderebene über den stationär angeordneten Antrieb 30 umgestellt werden. Bei der Kopplung des rotativen Antriebs 30 zu der Sternsäule 7 handelt es sich um einen mechanischen Antrieb wie beispielsweise ein Zahnstangengetriebe. Es kann hier aber ebenso eine Übersetzung über eine Kugelgewindespindel oder alternativ ein elektrischer Motor, insbesondere ein Servomotor oder Linearmotor, ein Fluidantrieb (Pneumatik- oder Hydraulikzylinder) oder eine, insbesondere zustellbare, Steuerkurve mit Kurvenfolger verwendet werden. Der Antrieb 30 befindet sich innerhalb des abdichtenden Gehäuses 8 der Sternsäule. Vorzugsweise kann dieser wegen der besseren Zugänglichkeit auch unterhalb der Sternsäule angeordnet sein.

An jeder Halterung der Klammerklauen 2a', 2a'', 2b', 2b" sind jeweils mit der zugeordneten Transportsternscheibe 3 verbundene Drehlager (nicht gezeigt) angebracht, um die sich die Klammerklauen 2a', 2a'', 2b', 2b'' zur Aufnahme eines Behälters 9 drehen können. Gesteuert wird die Greifbewegung über einen Spreiznocken 4 der die bzgl. der Fördervorrichtung weiter innenliegenden Enden der Klammerklauen 2a', 2a'', 2b', 2b" auseinander spreizen kann. Der Spreiznocken 4 ist über eine mit ihm drehfest verbundene Verbindungswelle 6 drehbar auf der Transportsternscheibe 3 angeordnet und wird von einem Betätigungsnocken 5, welcher in Rotationsrichtung der Transportsternscheibe 3 fest angeordnet ist, an den Behälterübergabepunkten betätigt. Die Verbindungswellen 6a, 6b weisen an dem den Spreiznocken 4 abgewandten Ende ebenfalls einen von der Kreisform abweichenden Querschnitt auf, um mit dem Betätigungsnocken 5 zusammenwirken zu können. In diesem Fall ist die Verbindungswelle 6a der oberen Klammer 2a nach oben stehend und oberhalb der Klammer 2a betätigbar, die Verbindungswelle 6b von unten.

Gemäß der Ausführung in Figur 5 sind jeder der zwei unterschiedlichen Klammern 2a, 2b separate Betätigungsnocken 5 zugeordnet. Die Betätigungsnocken 5 sind jeweils über einen eigenen Antrieb 31, 31' umstellbar. Bei einer Umstellung auf einen Einsatz der Klammern 2b der Sternscheibe 3b werden die Betätigungsnocken 5 ebenfalls umgestellt. Hier befindet sich der Betätigungsnocken 5, der der unteren Sternscheibe 3b zugeordnet ist, unterhalb dieser und der Betätigungsnocken 5, der der oberen Sternscheibe 3a zugeordnet ist, oberhalb dieser. Der Sitz des Antriebs 31' befindet sich im ersteren Fall an einer nicht gezeigten feststehenden Decke einer Einhausung der Maschine. Der Antrieb 31 sitzt an der Einhausung der Sternsäule 8.

Vorzugsweise befindet sich zur Verschleißreduktion der Betätigungsnocken 5, welcher der Klammer 2b zugeordnet ist, die gerade keine Behälter 9 fördert, nicht im Eingriff mit den ihm zugehörigen Verbindungswellen 6a, 6b. In anderen Worten werden nur die Aufnahmen 2 betätigt, die auch Behälter 2 transportieren.

Mit der in dieser Figur und in den folgenden Figuren gezeigten Anordnung von zwei Garnituren ist es somit möglich, auf einer sehr kleinen Aufstellfläche möglichst viele Aufnahmen einer Art auf einer Ebene anzuordnen und gleichzeitig eine zweite Garnitur für einen Formatwechsel bereitzustellen.

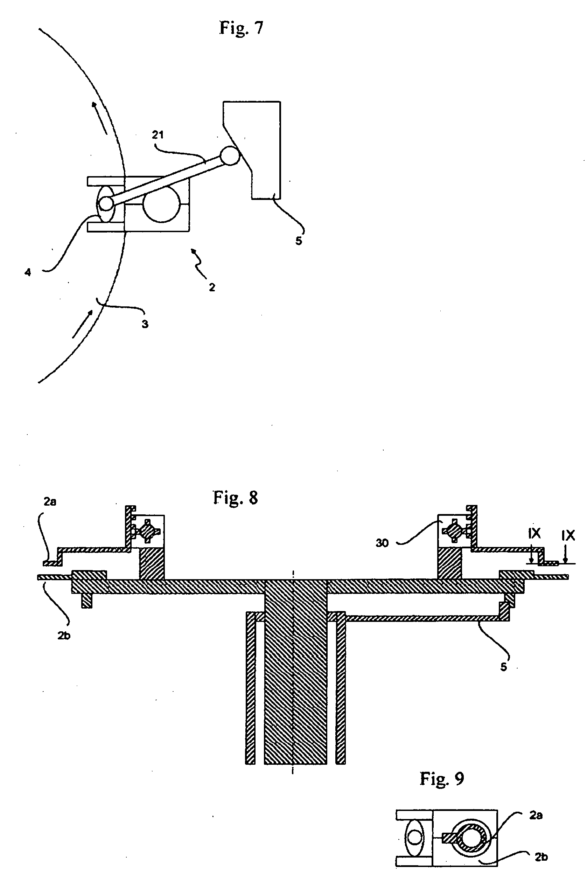

Die Figuren 6 und 7 zeigen im Prinzip den gleichen Grundaufbau wie Figur 5, mit dem Unterschied, dass keine Umstellung der Betätigungsnocken 5 benötigt wird. In dem Fall ist nur ein Betätigungsnocken 5 zur Betätigung der ersten und zweiten Klammern 2 vorgesehen. Der Betätigungsnocken 5 ist radial außerhalb der Fördervorrichtung 1 angeordnet. In dem Fall ist der Nocken 5 nur mit der sich jeweils in der Förderebene befindlichen Klammer 2, bzw. mit deren Verbindungswelle 6a, 6b, in Kontakt bringbar. An den Verbindungswellen 6a, 6b sind hier radial nach außen ragende Hebel 21 angeordnet, mittels derer die Spreiznocken 4 der Klammern betätigt werden können. Insbesondere ist bei dieser Variante die Klammer 2 durch eine nicht dargestellte Feder in einer geschlossenen, den Behälter 9 greifenden, Stellung und wird durch den Betätigungsnocken 5 geöffnet. Die in Figur 7 dargestellten Pfeile zeigen die Umlaufrichtung der Fördervorrichtung 1 an. Der Betätigungsnocken 5 ist hier als Steuerkurve ausgeführt, es kann aber auch ein Bolzen verwendet werden.

Figuren 8 und 9 zeigen ebenfalls eine erfindungsgemäße Fördervorrichtung 1, bei der sowohl die erste als auch die zweite Klammergarnitur 2a, 2b auf der gleichen Transportsternscheibe 3 angeordnet sind. Der Betätigungsnocken 5, die Sternsäule 7 und die Transportsternscheibe 3 sind in der Höhe fixiert bzw. nicht umstellbar. Ebenfalls ist die Klammer 2b nicht umstellbar auf der Transportsternscheibe 3 angeordnet. Die einzelnen Klammern 2a und 2b sind in denselben Positionen entlang des Umfangs der Fördervorrichtung 1 angeordnet. Die Klammer 2a ist hier kleiner ausgeführt als die Klammer 2b. Durch den Antrieb 30 kann die Klammer 2a in die Förderebene E, in der sich in dieser Figur die Aufnahme 2b befindet, umgestellt werden. Dadurch, dass die Klammer 2a in die Ausnehmung, in der Behälter 9 von der Klammer 2b transportiert werden, vollumfänglich hineinpasst, kann diese ohne eine Umstellung der Klammer 2b in die Förderebene umgestellt werden. Dabei kann die zustellbare kleinere Klammer 2a entweder einen eigenen, nicht dargestellten, Antrieb zum Bewegen bzw. Spreizen/Verklemmen der Klammerklauen 2a', 2a'' aufweisen, oder den Betätigungsmechanismus 5 der Klammer 2b mitnutzen. Insbesondere ist daran gedacht, bei sehr kleinen Aufnahmedurchmesserunterschieden von Klammer 2a und 2b einen Teil der Klammer 2a außerhalb der Förderebene auf die Klammer 2b anzuordnen und nur einen dünnwandigeren Teil der Klammer 2a, also die Aufnahmefläche für die Behälter, als Vorsprung zu gestalten, der in die Förderebene hineinragt.

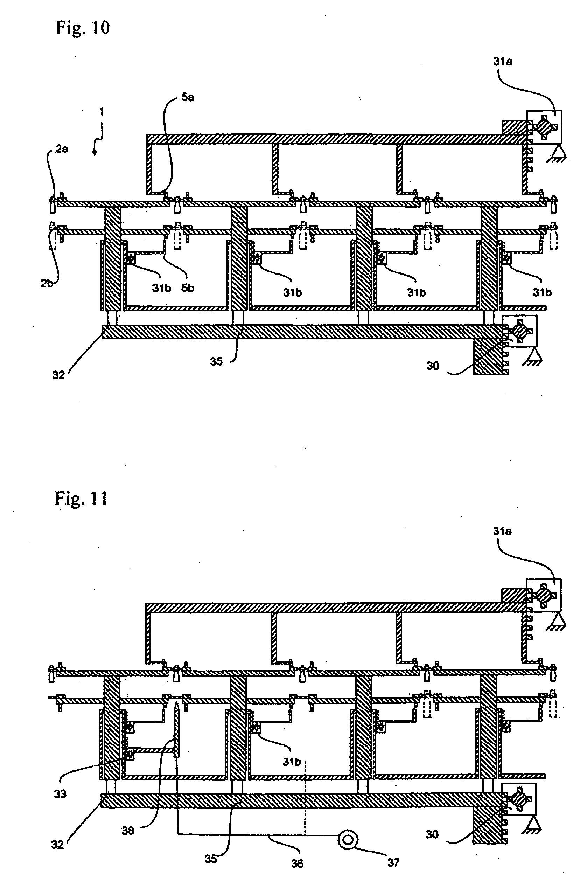

Figur 10 zeigt mehrere Fördervorrichtungen 1, die von einem gemeinsamen Antrieb 30 in ihrer Gesamtheit umstellbar sind. Die Fördervorrichtungen sind auf einem gemeinsamen Tisch 35 angeordnet, welcher durch den Antrieb 30 in der Höhe umstellbar ist. Der Antrieb 30 wird insbesondere hydraulisch betrieben. Auf diese Weise sind die Aufnahmen 2 mehrerer Fördervorrichtung 1 gleichzeitig in die Förderebene umstellbar. Ebenfalls sind hier die Antriebe der Fördervorrichtungen 32 gezeigt, die den Transport der Behälter 9 in Umlaufrichtung der Fördervorrichtungen 1 gewährleisten. Bei diesen Antrieben 32 handelt es sich üblicherweise um Servomotoren, insbesondere um Direktantriebe.
Ebenfalls sind die oberen Betätigungsnocken 5a mehrerer Fördervorrichtungen 1 gleichzeitig über den Antrieb 31a umstellbar. In diesem Beispiel sind die unteren Betätigungsnocken 5b über Antriebe 31b einzeln umstellbar. Prinzipiell ist es aber auch möglich, einen gemeinsamen Antrieb 31b für die gleichzeitige Umstellung der unteren Betätigungsnocken 5b vorzusehen, oder die Betätigung wie in den anderen Ausführungsbeispielen zu gestalten.

Figur 11 zeigt den prinzipiellen Aufbau von Figur 10. Hier sind neben der Fördervorrichtung 1 auch Mittel zum Kühlen 38 der Behältnisse 9 vorhanden. Die Funktionsweise kann ähnlich zu der aus dem Dokument EP 2 000 285 A1 gewählt werden. Um ein Abkühlen von Teilbereichen, insbesondere des Bodens, der Behältnisse 9 vor einer Abfüllung in einer Füllmaschine zu gewährleisten, weist der Bereich der Fördervorrichtung 1 in Transportrichtung vor der Füllmaschine Mittel zum Abkühlen 38 der Behältnisse 9 auf. Diese Mittel 38 können beispielsweise feststehende- oder mit dem Behältnis 9 mitlaufende Sprüh- oder Spritzvorrichtungen sein, die das Behältnis 9 in Teilbereichen mit einem Fluid, insbesondere Wasser benetzen, es sind aber auch feststehende- oder mit dem Behältnis 9 mitlaufende Schwämme oder Tauchbäder möglich. Insbesondere kann durch diese Mittel 38 die Wärme des Behältnisses 9, die durch den Produktionsprozess in einer Blasmaschine entstanden ist, abgeführt werden. Insbesondere sind die Mittel zum Abkühlen 38 ebenfalls in der Höhe umstellbar. Dies kann, wie gezeigt, durch separate Antriebe 33 oder durch eine Kopplung mit dem Antrieb zum Umstellen der Fördervorrichtung 30 oder mit dem Antrieb zur Umstellung 31 der Betätigungsnocken 5a, 5b erfolgen. In der Figur 11 sind weithin Leitungen 36 zur Versorgung mit Fluid zu sehen, die die Mittel zum Abkühlen 38 mit einer Pumpe 37 verbinden. Insbesondere handelt es sich bei den Leitungen 38 um flexible Schläuche, die eine Umstellung sehr einfach gewährleisten.

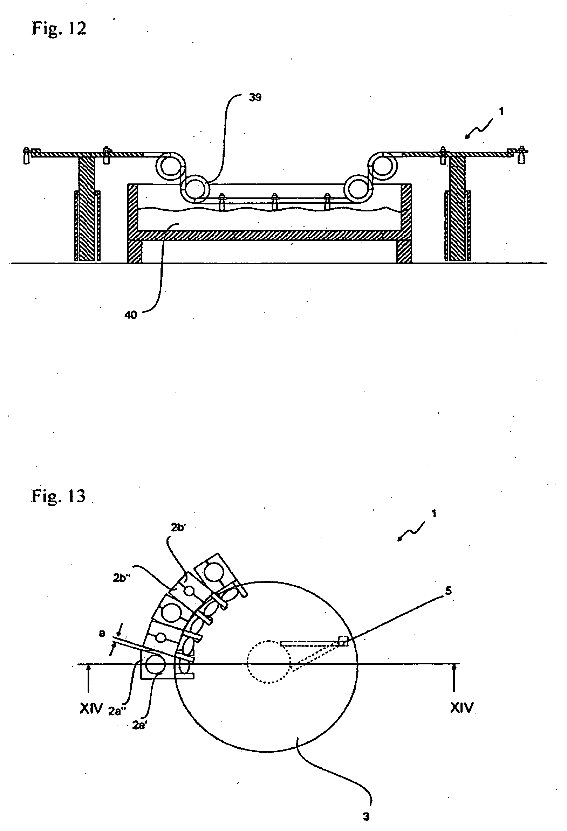

Bei einem feststehenden Tauchbad 40, wie in Figur 12 gezeigt, könnten die Behältnisse 9 mit einem Riemenförderer 1, an dem eine Vielzahl von Aufnahmen 2 angeordnet sind, transportiert werden. Der Riemen verläuft durch Mittel zum Umleiten 39, wie beispielsweise Umleiträder, bereichsweise (im Bereich des Tauchbads) in lotrechter Richtung niedriger als der Bereich der Aufnahmepunkte der Behältnisse 9. Durch diesen Verlauf ist eine Vielzahl von Behältnissen 9 gleichzeitig in ein feststehendes Tauchbad 40 bereichsweise (insbesondere der Boden) eintauchbar. Insbesondere sind das Tauchbad 40 oder die Mittel zum Umlenken 39 ebenfalls höhenverstellbar. Die Merkmale der höhenverstellbaren Mittel zum Abkühlen 38 von Behältnissen 9 und das feststehende Tauchbad 40 stellen auch separate Erfindungen dar, die auch unabhängig von dieser Anmeldung beansprucht werden können.

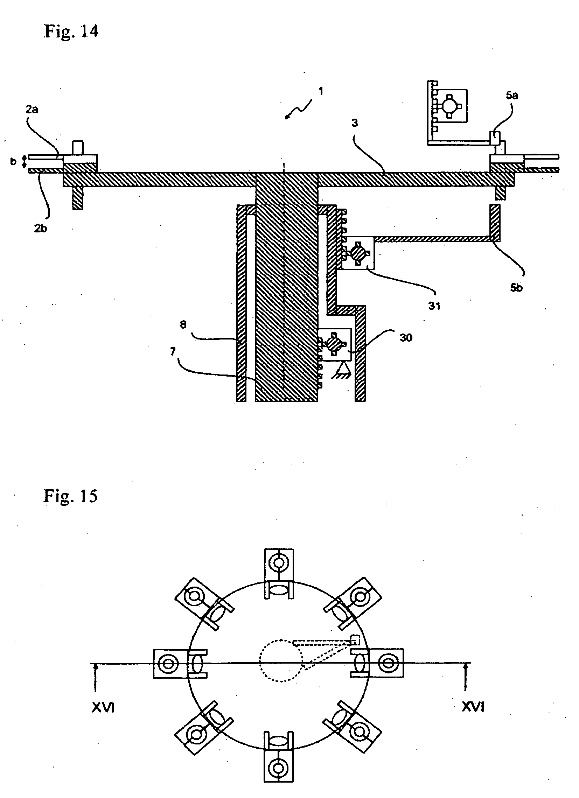

Figuren 13 und 14 zeigen eine Ausführungsform, die nicht Bestandteil der Erfindung ist, in der die Klammern 2a zu den Klammern 2b nicht nur höhenversetzt angeordnet sind, sondern auch in Umfangsrichtung versetzt. Beide Klammern 2a, 2b sind fest an der Transportsternscheibe 3 angeordnet. Der Abstand b der Klammern beträgt insbesondere weniger als die Höhe des Behältnisses 9, welches mit der oberen Klammer 2a aufnehmbar ist, beispielsweise nur 1 mm bis 100 mm. Noch vorteilhafter wird der Abstand b so gewählt, dass der maximale Schulterdurchmesser eines Behältnisses 9 unterhalb der unteren Klammern 2b angeordnet ist. Auf diese Weise können die unteren Klammern 2b enger zueinander am Umfang der Fördervorrichtung 1 angeordnet werden. Zu beachten ist auch der Abstand a, der bei einer sehr nahen Anordnung der Klammern 2a und 2b in der Höhe (Abstand b) so gewählt werden muss, dass eine Mündung eines Behältnisses 9, welches mit der unteren Klammer 2b aufgenommen wird, noch zu zwei benachbarten oberen Klammern 2a beabstandet ist. Insbesondere ist es bei dieser Ausführungsform wichtig, dass die Klammer 2, die keine Behältnisse 9 transportiert, nicht für ein Öffnen oder Schließen betätigt wird. Hierfür sind - wie schon bei Figur 5 erläutert, beide Betätigungsnocken 5a, 5b umstellbar. Die Sternsäule 7 und die Transportsternscheibe 3 sind über einen Antrieb 30 höhenverstellbar.

In dieser Ausführung kann eine Aufnahmeeinheit 2 auch von mindestens zwei zueinander versetzten Aufnahmen 2a, 2b gebildet werden.

Ebenfalls ist daran gedacht, mindestens zwei in Transportrichtung benachbarte Fördervorrichtungen 1, bei der die Aufnahmen 2a und 2b in Umfangsrichtung der jeweiligen Fördervorrichtung 1 versetzt zueinander sind, insbesondere nach einer Umstellung der Aufnahmen 2a, 2b, winkelgerecht zu synchronisieren. Dabei kann, ohne Behältnisse 9 zu transportieren, eine oder beide Fördervorrichtung(en) 1 um den benötigten Winkel gedreht werden, so dass die jeweiligen, nach der Umstellung verwendeten Aufnahmen 2a, 2b das selbe Behältnis 9 für eine Übergabe des Behältnisses 9 von der einen Fördervorrichtung 1 zur anderen im Übergabebereich gleichzeitig kontaktieren. Die Synchronisation kann insbesondere durch Servomotoren 32 erfolgen.

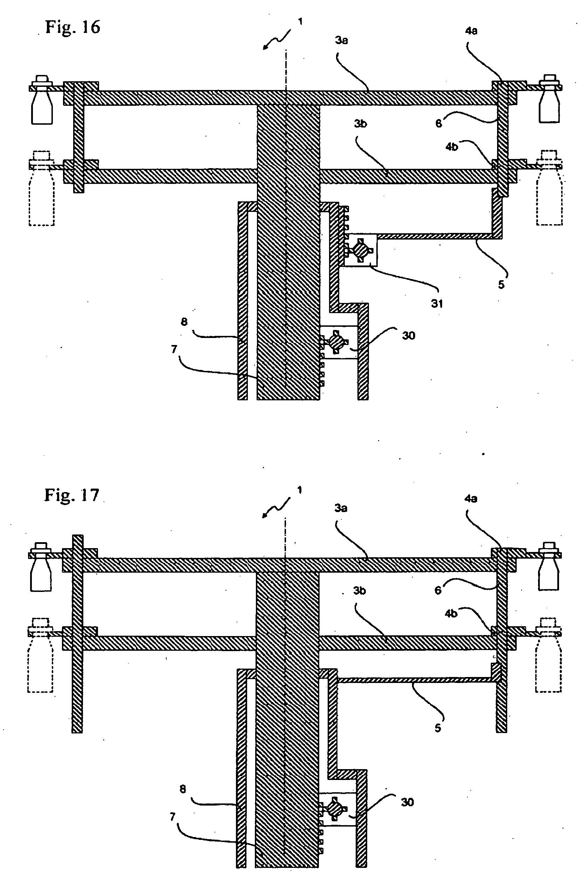

Figuren 15 und 16 zeigen eine Weiterentwicklung zu Figur 5, wobei beide Klammern 2a, 2b von einem gemeinsamen Betätigungsnocken 5 betätigt werden. Hierfür sind die jeweiligen Spreiznocken 4a, 4b fest mit der gleichen Verbindungswelle 6 verbunden, bzw. an ihr angeordnet. Der Betätigungsnocken 5 ist über den Antrieb 31, genau so wie die Sternsäule 7 und die Transportsternscheiben 3a, 3b über den Antrieb 30, höhenverstellbar. In diesem Fall wird auch die Klammer 2a, 2b, die keine Behältnisse 9 fördert, betätigt.

Bei der Ausführung in Figur 17 sind im Vergleich zur Figur 16 nur die Sternsäule 7 und die Transportsternscheiben 3a, 3b höhenverstellbar. Der Betätigungsnocken 5 ist fest an der Fördervorrichtung 1 angeordnet bzw. nicht verstellbar und betätigt die Spreiznocken 4a, 4b beider Klammern 2a, 2b. Je nachdem, welche Klammer 2a, 2b Behältnisse 9 fördert, wird die Verbindungswelle 6 bzw. der damit verbundene Spreiznocken 4a, 4b an unterschiedlichen Stellen betätigt. Die Verbindungswelle 6 ist hierzu um den Abstand verlängert, der zwischen den Aufnahmen 2a und 2b vorherrscht. Die Länge der Verbindungswelle muss also hier mindestens so lang wie die doppelte Summe aus dem Abstand der Aufnahmen 2a und 2b sein. Ebenfalls ist daran gedacht, den Betätigungsnocken 5 oberhalb der oberen Sternscheibe 3a anzubringen. Auch wäre es denkbar, den Nocken 5 zwischen den beiden Aufnahmen im Bereich der Verbindungswelle 6, insbesondere knapp oberhalb (wegen der Höhe der Behälter 9, die mit der oberen Aufnahme 2a transportiert werden), anzuordnen. Auf diese Weise müsste diese nicht verlängert ausgeführt werden.

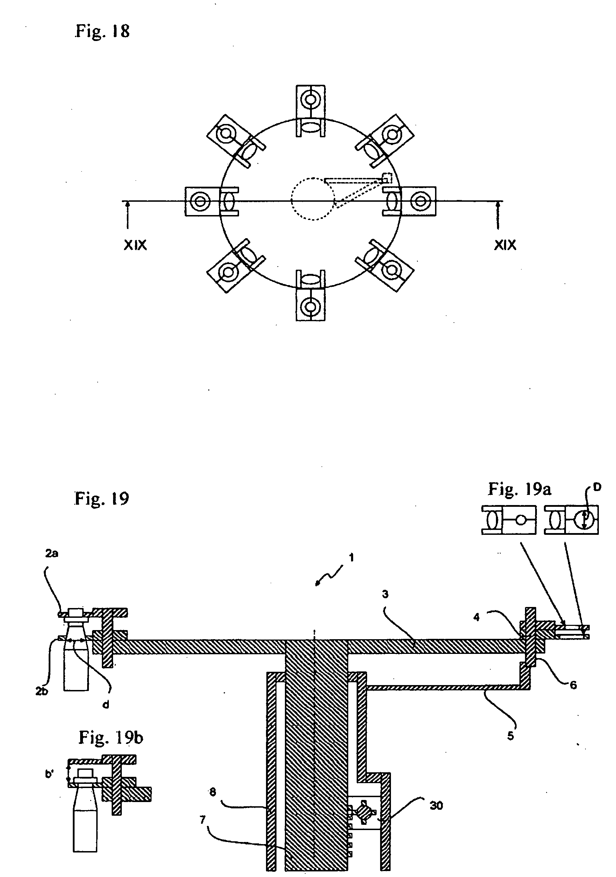

In den Figuren 18, 19, 19a und 19b ist eine Ausführungsform zu sehen, in der die in der Höhe nah aneinanderliegende Anordnung der Aufnahmen 2a und 2b aus Figur 14 und die beider Aufnahmen 2 gemeinsame Verbindungswelle aus Figur 17 kombiniert wurden. Beide Aufnahmen 2a, 2b sind gleichmäßig am Umfang der Transportsternscheibe 3 verteilt und nicht versetzt zueinander. In dem Fall ist es wichtig, dass der Behälter 9, der von der oberen, im Aufnahmedurchmesser kleineren Aufnahme 2a gegriffen wird, einen kleineren oder maximal gleichgroßen Durchmesser d in dem Bereich des Aufnahmedurchmessers D der zweiten, größeren, unteren Aufnahme 2b aufweist. Beim Fördern mit der unteren Aufnahme 2b muss die Mündungshöhe des Behälters 9 kleiner sein als der Abstand der Aufnahmen b'. Die Kriterien im ersten Fall gelten insbesondere dann, wenn der der Durchmesser d größer ist als der Mündungsdurchmesser. Beim Transport von Vorformlingen beispielsweise, muss auf dieses Kriterium nicht geachtet werden. Hier könnte auch die größere Klammer 2b oberhalb der Kleineren 2a angeordnet werden. Durch nicht gezeigte, geeignete Mittel wäre es auch denkbar, die untere Klammer 2b so weit zu öffnen und offen zu halten, dass auch größere Durchmesser d von Behältern 9 mit der oberen Klammer 2a aufgenommen werden können. Ein Mittel hierzu wäre eine in Umlaufrichtung der Fördervorrichtung voll umlaufende, insbesondere zustellbare, Steuerkurve. Es können aber auch ein elektrischer Antrieb zur Betätigung der Klammern 2 oder Mittel zum Einrasten der Klammern 2 eingesetzt werden.

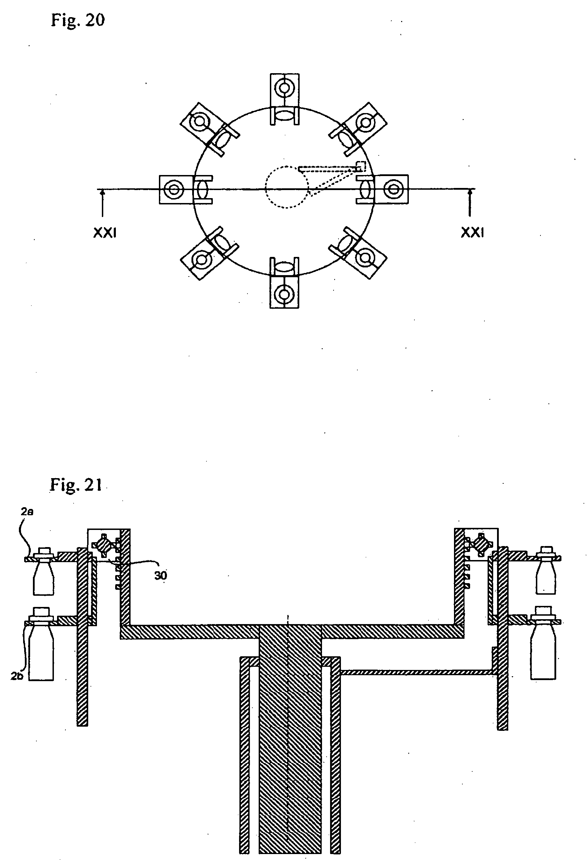

In den Figuren 20 bis 23 ist eine Ausführungsform einer erfindungsgemäßen Fördervorrichtung 1 dargestellt, bei der jede einzelne Aufnahmeeinheit 2, bestehend aus den Klammern 2a und 2b, ihren eigenen Antrieb zur Umstellung 30 aufweist. Die Betätigung der Klammern 2 erfolgt analog zu Figur 17, nur ist hier die Sternsäule 7 bzw. die Transportsternscheibe 3 nicht umstellbar. Der mindestens eine Antrieb zur Umstellung 30 der mindestens einen Klammer 2 ist an der Transportsternscheibe 3 bzw. an der Aufnahmeeinheit 2 angebracht.

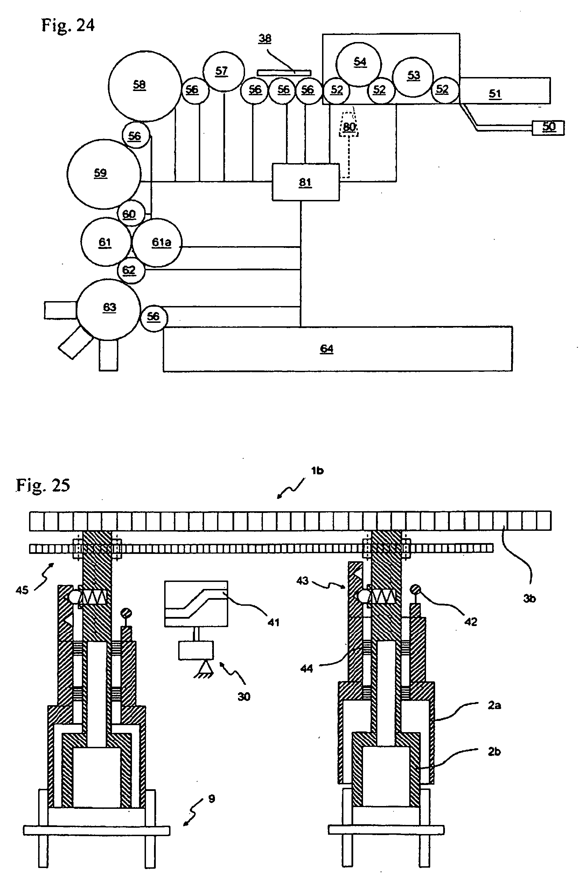

Es wäre auch denkbar, jeder der Klammern 2a und 2b einen eigenen Antrieb 30 zuzuordnen. Mit einer individuellen Zuordnung eines Antriebs 30 zu einer Klammer 2a, 2b oder Aufnahmeeinheit 2 ist es möglich, verschiedenartige Behälter 9 in einem Produktionsdurchlauf, das heißt, ohne Maschinenstopp, also während des Betriebs, kurzfristig nacheinander zu transportieren. Über eine Steuerung 81 und/oder einen Sensor 80 (siehe Figur 24) ist es möglich, kurz vor der Aufnahme eines Behälters 9 vorzugeben, welche Klammer 2a, 2b, den Behälter 9 aufnehmen und transportieren kann bzw. soll. Ebenso ist es möglich, eine Weiche zur Auftrennung oder Zusammenführung unterschiedlicher Behälterströme mit einer Fördervorrichtung 1 zu realisieren. Beispielweise könnten an der gezeigten Fördervorrichtung 1 in Transportrichtung der Behälter 9 stromabwärts zwei weitere Fördervorrichtungen angeordnet sein, die unterschiedliche Behälter 9 weiter transportieren. Dabei können auch vor/in/nach der Fördervorrichtung 1 zwei oder je nachdem, wie viele Aufnahmen 2 übereinander angeordnet sind, mehrere Förderebenen E vorgesehen sein, wobei die Fördervorrichtung 1 wahlweise Behälter 9 aus der oberen oder unteren Ebene E mit einer bestimmten Klammer 9 entnehmen und wahlweise bestimmte Behälter 9 an bestimmte Fördervorrichtungen 1 in bestimmten Ebenen E steuerbar abgeben kann. Dies ist in Figur 24 dargestellt, wobei die Fördervorrichtung 60, die insbesondere auch dazu geeignet sein kann, Behältnisse mit einem Inertgas zu beaufschlagen, den Behälterstrom zu zwei unterschiedlichen Verschließern 61 und 61a zuführen kann.

Figur 21 zeigt hierbei eine gleichzeitige Aufnahme und einen Transport eines kleinen Behältnisses 9 und eines größeren Behältnisses 9.

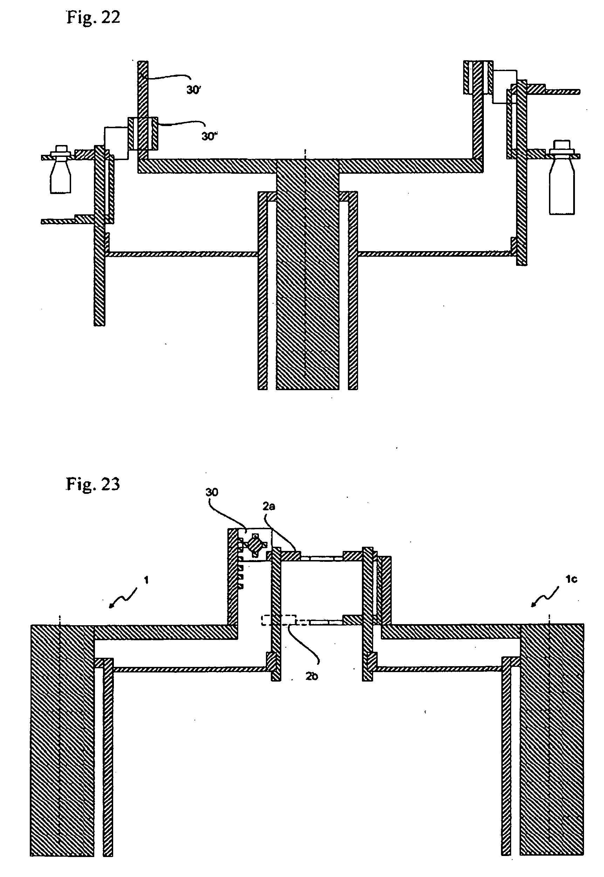

Figur 22 zeigt eine Aufnahme eines Behältnisses 9 in einer Förderebene E und die Abgabe eines kleineren Behältnisses 9 in der gleichen Förderebene E mit einer umgestellten Aufnahme 2. Der Antrieb zur Umstellung der Aufnahme 30 ist als tubularer Linearmotor mit Läufer 30'' und Stator 30' ausgeführt.

Figur 23 zeigt eine Fördervorrichtung 1 mit nur einer Klammer 2a, welche derart steuerbar ist, dass ein Behältnis 9 wahlweise in zwei Ebenen E einer weiteren Fördervorrichtung 1c übergeben werden kann. Gestrichelt gezeichnet sieht man eine weitere optionale Aufnahme 2b, welche für den Transport von Behältern 9 mit anderen Abmaßen Verwendung findet.

Allgemein ist auch daran gedacht, dass genau doppelt so viele oder ein ganzzahliges Vielfaches der Aufnahmen einer ersten Art 2a auf der Fördervorrichtung 1 angebracht sind, wie Aufnahmen einer zweiten Art 2b. Insbesondere sind hier die Aufnahmen 2a geringerer Anzahl auf der Fördervorrichtung 1 am Umfang an den gleichen Positionen angeordnet wie Aufnahmen der zweiten Art 2b.

Die Figur 24 zeigt eine komplette Abfülllinie, wobei mindestens eine erfindungsgemäße Fördervorrichtung 1 in der Linie vorhanden ist. Darunter fallen können: eine Vorformlingszuführeinrichtung 50; ein Ofen zum Erwärmen der Vorformlinge 51; ein Übergabestern zur Änderung des Abstands 52 zwischen den Vorformlingen; eine weitere Behandlungsvorrichtung für Vorformlinge 53, wie beispielsweise ein Modul für eine Sterilisation oder ein Modul zum Erwärmen unterschiedlicher Wandbereiche, insbesondere Umfangsbereiche, eines Vorformling; eine Blasmaschine 54 zum Expandieren der Vorformlinge zu Behältnissen gegen eine Innenwandung einer nicht gezeigten, konturierten Blasform; ein Transferstern 56; eine weitere Behandlungseinheit 57, insbesondere ein Sterilisationsmodul für die Behältnisse; eine Rinsvorrichtung 58 zum Spülen der Behälter, insbesondere mit sterilem Wasser; eine Abfüllmaschine 59 zum Abfüllen der Behälter mit einem Füllgut; eine Vorrichtung zur Einspritzung 60 eines Inertgases in die Behältnisse; eine Verschließvorrichtung 61, 61a für das Versiegeln, insbesondere für das Verschließen der Behältnisse mit Verschlusskappen; ein Absenkstern 62 zum Überführen der Behältnisse auf ein Transportband, in anderen Worten von einem Neckhandling in ein Basehandling; eine Etikettiervorrichtung 63 für die Behältnisse und eine Verpackungsanlage 64 für das Verpacken bzw. Zusammenführen von einzelnen Behältnissen zu Gebinden und/oder auf Paletten. Sollte die Fördervorrichtung 1 sowohl bei allen Behälter 9 behandelnden Maschinen 50, 51, 53, 54, 56, 57, 58, 59, 60, 61, 62, 63, 64 als auch bei allen Förderern ohne zusätzliche Behälterbehandlung 52, 56, 62 angebracht sein, so wäre die Abfüllanlage prinzipiell auch dazu geeignet, zwei verschiedene Behälter 9 durchgängig in zwei Ebenen zu fördern. Dies muss aber nicht durchgängig der Fall sein, sondern kann auch bereichsweise stattfinden. Der Einsatz der erfindungsgemäßen Fördervorrichtung 1 ist insbesondere für die Förderer 52, 56, und den Ofen 51 von Vorteil. Es könnten aber auch geeignete Maßnahmen getroffen werden, mindestens eine Behandlungseinheit für eine Behandlung der Behälter in 2 Ebenen auszurüsten. So könnten zwei Blasformen übereinander an einem umlaufenden Blasrad angeordnet werden, die insbesondere wahlweise mit Vorformlingen versorgt werden. Ebenfalls sind zwei Füllventile, Verschließköpfe, Sterilisations- oder Rinsdüsen oder Etikettenspender übereinander denkbar. Man könnte auch die Behandlungseinheiten höhenverstellbar gestalten. Auch ist daran gedacht, Behandlungseinheiten als Aufnahmen 2 auszuführen.

Um einen solchen Ablauf, insbesondere bei einer Förderung von unterschiedlichen Behältern 9 in einem Produktionsdurchlauf und/oder einer Förderung von zwei Behältern auf zwei Ebenen, zu gewährleisten, sind insbesondere alle-Maschinen an eine gemeinsame Steuerungseinrichtung 81 angeschlossen, die die jeweilige Behandlung und die hierfür nötige Aufnahme 2 dem jeweiligen Behälter zuordnen kann. Hierfür kann auch ein Sensor 80 vorgesehen sein, der die Behältnisse 9 oder die behälterspezifischen Merkmale wie unterschiedliche Außendurchmesser, insbesondere Mündungsdurchmesser, vor einer Fördervorrichtung 1 erkennt und die Antriebe zur Umstellung 30 der Aufnahmen 2 entsprechend steuert. Vor der Blasmaschine kann auch noch eine Vorrichtung zum Spritzen von Vorformlingen aus PET, PP, HDPE oder dergleichen angeordnet sein.

Insbesondere sind bis auf die Verpackungsanlage 64 und den Ofen 51 bzw. die Vorformlingszuführeinrichtung 50 alle Maschinen als Rundläufer ausgeprägt, an deren Umfang eine Vielzahl von Aufnahmen 2 und optional Behandlungseinheiten angeordnet sind. Der Ofen 51 könnte aber auch insbesondere als Rundläuferofen ausgeführt sein, speziell, wenn es sich um einen Ofen handelt, in dem die Vorformlinge 9 in einzelnen Heizkavitäten, insbesondere mit Mikrowellen, erwärmt werden.

Zusätzlich ist in Figur 24 die bereits oben erwähnte Behälternachkühlung, bzw. das Mittel zum Abkühlen 38, gezeigt, welche zwischen Blasmaschine und 54 und Füllmaschine 59 angeordnet ist.

Zusätzlich wird hiermit Bezug auf die zu dem Zeitpunkt dieser Anmeldung noch nicht veröffentlichten Druckschriften DE102010042925.2, DE102010042165.0 und DE102010003350.2, deren Inhalt ebenfalls als Offenbarung zu dieser Anmeldung hinzugenommen wird.

Figur 25 zeigt eine Ausführungsform der Erfindung, bei der zwei Innengreifer 2a, 2b zu sehen sind, welche ein Behältnis 9 am Mündungsbereich von innen kontaktieren und fördern. Dies findet insbesondere bei einem Ofen 51 (Figur 24) Verwendung, bei dem Vorformlinge 9 durch eine Heizstrecke, insbesondere einen Heiztunnel, mittels einer angetriebenen Kette 3b transportiert werden, wobei sich an der Heizstrecke seitliche eine Vielzahl von Infrarotstrahlern befindet, die die Vorformlinge 9 beim Transport erwärmen. Üblicherweise werden die Innengreifer 2a, 2b zusätzlich durch einen Antrieb 45 während des Förderns gedreht. Dies kann über einzelnen Innengreifern 2a, 2b zugeordnete Servomotoren geschehen oder über, wie hier dargestellt, eine an den Heizdornen 2 angebrachte Verzahnung, die sich insbesondere mit einer Kette im Eingriff befindet.

Alternativ können die dargestellten Heizdorne 2 bzw. die Mittel zum Umstellen 30 auch bei der Erwärmung von Vorformlingen 9 in mindestens einer, mindestens einem Vorformling 9 zugeordneten, Heizkavität oder zugeordnetem Resonator eingesetzt werden, die bzw. der den mindestens einen Vorformling 9 zumindest bereichsweise umgibt und in dem der Vorformling 9 beispielsweise mittels Mikrowellen erwärmt wird. Die Heizkavitäten können feststehen oder auch kontinuierlich angetrieben werden, wie zum Beispiel in einer rundlaufenden Maschine.

Das Prinzip aus Figur 25 ist ähnlich dem aus Figur 9, wobei ein Heizdorn 2b nicht umgestellt werden kann und nur der zweite Heizdorn 2a im Bedarfsfall zustellbar ist. Es wäre aber auch denkbar, jedem Greifer 2 einen eigenen Antrieb zur Umstellung 30 in die Förderebene zuzuordnen. Die Heizdorne 2a und 2b sind koaxial zueinander angeordnet, wobei der Heizdorn 2a gegenüber dem Heizdorn 2b umstellbar ausgebildet ist. Geführt wird der größere Heizdorn 2a über Lager 44, die zwischen dem Heizdorn 2a und 2b angeordnet sind. Im einfachsten Fall handelt es sich hierbei um Gleitlager.

Der Transportpfad erstreckt sich bei dieser Ausführung insbesondere zumindest bereichsweise linear.

Die Umstellung eines Heizdorns 2 erfolgt in Figur 25 über eine feststehende, zuschaltbare Nutkurve 41, die durch einen Antrieb 30 im Bedarfsfall zugestellt wird. Über eine, an jedem größeren Heizdorn 2a sitzende Steuerrolle 42 wird der größere Heizdorn 2a aus der Förderebene heraus umgestellt, so dass der festsitzende Heizdorn 2b zum Einsatz kommt. Nach der Umstellung wird der Heizdorn 2a über einen Rastmechanismus 43 in seiner neuen Stellung gehalten. Hier ist der Rastmechanismus 43 als gefederte Kugel ausgebildet, die in mehrere, unterschiedlich hoch angeordneten Nuten oder Bohrungen des größeren Heizdorn 2a eingreifen kann.

Denkbar wäre auch, einen Heizdorn 2a durch Drehung um dessen Längsachse umzustellen, indem am Heizdorn 2a ein Bewegungsgewinde angebracht ist, welches beispielsweise gegenüber einem Gegengewinde des hier dargestellten, drehfest angeordneten Heizdorns 2b rotiert und so die axiale Umstellung gewährleistet.

Die Ausführungen gemäß der Figuren 4 bis 24, in denen nur Klammern 2 dargestellt sind, finden ebenfalls bei Vorrichtungen gemäß Figur 3, wo lediglich weitere Elemente zwischen der Transportsternscheibe 3 und der Aufnahme 2 angeordnet sind, als auch bei der Fördervorrichtung gemäß Figur 25, also bei Innengreifern 2, Vakuumgreifern, die Behälter ansaugen, oder anderen Fördervorrichtungen, die beispielsweise Behälter mit Luft fördern, als auch anders herum Verwendung.

## Patentansprüche

1. Fördervorrichtung (1) für Behältnisse (9), insbesondere Vorformlinge oder Flaschen, aufweisend mindestens eine erste für einen Transport von mindestens einem ersten Behältnis (9) geeignete Aufnahme (2a) und mindestens eine zweite für einen Transport von mindestens einem zweiten Behältnis (9) geeignete Aufnahme (2b), wobei jede der Aufnahmen (2a, 2b) an der Fördervorrichtung (1) angeordnet ist und jede der Aufnahmen (2a, 2b) auf ein geometrisches Merkmal der aufzunehmenden Behältnisse (9) durch einen Aufnahmedurchmesser (D, d) angepasst ist, und wobei mindestens eine Förderebene (E) vorgesehen ist, in der die Behältnisse (9) entlang eines vorgegebenen Transportpfads von mindestens einer der Aufnahmen (2a, 2b) transportierbar sind, wobei die mindestens eine erste Aufnahme (2a) bereichsweise in einer auf der Förderebene (E) senkrecht stehenden Richtung von der zweiten Aufnahme (2b) beabstandet angeordnet ist und dass mindestens eine der Aufnahmen (2a, 2b) in die mindestens eine Förderebene (E) der Behältnisse (9) über einen Antrieb (30) oder manuell mit mit einer Rastung (43) versehenen Mitteln zur Umstellung umstellbar ist, und die Aufnahme (2a, 2b) durch die Umstellung an die Stelle der anderen Aufnahme (2a, 2b) tritt, **dadurch gekennzeichnet, dass** die mindestens eine erste und die mindestens eine zweite Aufnahme (2a, 2b) unterschiedliche Aufnahmedurchmesser (D, d) aufweisen und an derselben Position entlang des Umfangs der Fördervorrichtung (1) angeordnet sind.

2. Fördervorrichtung nach Anspruch 1, **dadurch gekennzeichnet, dass** die mindestens eine erste Aufnahme (2a) mindestens einer der zweiten Aufnahmen (2b) zugeordnet ist und in deren Position zur Förderung der zweiten Behältnisse (9) umstellbar ist, wobei die Zuordnung der mindestens zwei Aufnahmen (2a, 2b) eine Aufnahmeeinheit (2) bildet.

3. Fördervorrichtung nach Anspruch 1 oder 2, **dadurch gekennzeichnet, dass** mindestens eine der Aufnahmen (2a, 2b) bei der Umstellung linear bewegbar ist

4. Fördervorrichtung nach einem der vorgehenden Ansprüche, **dadurch gekennzeichnet, dass** ein Antrieb (32) zum Antreiben der Fördervorrichtung (1) vorgesehen ist und der Antrieb (32) zu einer kontinuierlichen Betriebsweise der Fördervorrichtung (1) geeignet ist.

5. Fördervorrichtung nach einem der vorgehenden Ansprüche, **dadurch gekennzeichnet, dass** es sich bei den Aufnahmen (2) um einen Außen-, um einen Klammer-, oder Innergreifer handelt, der die Mündung des Behältnisses (9) zumindest zeitweise kontaktiert.

6. Fördervorrichtung nach einem der vorgehenden Ansprüche, **dadurch gekennzeichnet, dass** es sich bei der Fördervorrichtung (1) um einen rundlaufenden Sternförderer (56) handelt, an dessen Umfang eine Vielzahl von ersten Aufnahmen (2a) und zweiten Aufnahmen (2b) angeordnet sind.

7. Fördervorrichtung nach einem der vorgehenden Ansprüche, **dadurch gekennzeichnet, dass** ein Antrieb (30) für die Umstellung mindestens einer der Aufnahmen (2) in die Förderebene vorgesehen ist, welcher im Bereich der Fördervorrichtung (1) angeordnet ist, wobei es sich bei dem Antrieb (30) um einen elektrischen Antrieb, einen Servomotor, um einen Linearmotor, einen mechanischen Antrieb, eine von einem weiteren Antrieb zustellbare Steuerkurve, um einen Fluidantrieb oder um einen Pneumatikzylinder, handelt.

8. Fördervorrichtung nach einem der vorgehenden Ansprüche, **dadurch gekennzeichnet, dass** jeder Aufnahme (2a, 2b) oder Aufnahmeeinheit (2) an der Fördervorrichtung (1) ein individueller Antrieb (30) für die Umstellung der Aufnahme (2a, 2b) oder Aufnahmeeinheit (2) zugeordnet ist.

9. Fördervorrichtung nach einem der vorgehenden Ansprüche, **dadurch gekennzeichnet, dass** mindestens einer der Antriebe (30) für die Umstellung der Aufnahmen (2a, 2b) oder Aufnahmeeinheiten (2) an eine Steuerungseinrichtung (81) angeschlossen ist, welche dazu geeignet ist, mindestens eine der mindestens zwei Aufnahmen (2a, 2b) während des Betriebs der Fördervorrichtung (1) in die Förderebene (E) umzustellen.

10. Fördervorrichtung nach einem der vorgehenden Ansprüche, **dadurch gekennzeichnet, dass** mindestens eine, in Richtung des Transportpfads der Behältnisse (9) stationär angeordnete Betätigungseinrichtung (5), insbesondere ein Steuernocken, vorgesehen ist, welcher mit mindestens einer der Aufnahmen (2a, 2b) zusammenwirkt, um ein aktives Greifen oder Lösen dieser Aufnahme (2) zu bewirken.

11. Förderanlage mit mehreren Fördervorrichtungen nach einem der vorgehenden Ansprüche, **dadurch gekennzeichnet, dass** ein Antrieb für die Umstellung (30) der Aufnahmen (2) mehrerer Fördervorrichtungen (1) in die Förderebene (E) vorgesehen ist.

12. Verfahren zum Umstellen einer Fördervorrichtung (1) mit mindestens einer ersten Aufnahme (2a) zum Transport von einem ersten Behältnis (9) und mindestens einer zweiten Aufnahme 2b zum Transport von einem zweiten Behältnis (9), wobei die Aufnahmen (2a, 2b) durch einen Aufnahmedurchmesser (D, d) an die zu befördernden Behältnisse (9) angepasst sind, wobei mindestens die erste Aufnahme (2a) bereichsweise und zumindest zeitweise einen Abstand zur zweiten Aufnahme (2b) in einer zu einer Förderebene (E) der Behältnisse (9) senkrecht stehenden Richtung aufweist und die erste Aufnahme (2a) in die mindestens eine Förderebene (E) zum Transport der Behältnisse (9) in der Förderebene (E) über einen Antrieb (30) oder manuell mit mit einer Rastung (43) versehenen Mitteln zur Umstellung umgestellt wird, und die Aufnahme (2a, 2b) durch die Umstellung an die Stelle der anderen Aufnahme (2a, 2b) tritt, **dadurch gekennzeichnet, dass** die mindestens eine erste und die mindestens eine zweite Aufnahme (2a, 2b) unterschiedliche Aufnahmedurchmesser (D, d) aufweisen und an derselben Position entlang des Umfangs der Fördervorrichtung (1) angeordnet sind.

13. Verfahren nach Anspruch 13, **dadurch gekennzeichnet, dass** die Umstellung mindestens der ersten Aufnahme (2a) oder mindestens einer Aufnahmeeinheit (2) derart gesteuert wird, dass während des Betriebs einer Abfüllanlage wahlweise oder wechselweise eine der beiden Aufnahmen (2a, 2b) Behältnisse (9) fördert.

14. Verfahren nach Anspruch 13 oder 14, **dadurch gekennzeichnet, dass** durch mindestens einen Antrieb zum Umstellen (30) mehrere erste Aufnahmen (2a) gleichzeitig oder während eines Umlaufs der Fördervorrichtung (1) kurz nacheinander umgestellt werden.

15. Verfahren nach Anspruch 12, **dadurch gekennzeichnet, dass** mit jeweils nur einer der beiden in der Transportebene (E) zugestellten Aufnahmen (2a, 2b) während eines Betriebs der Fördervorrichtung (1) Behältnisse (9) transportierbar sind.

## Claims

1. Transport device (1) for containers (9), in particular preforms or bottles, comprising at least one first receptacle (2a) suitable for transporting at least one first container (9) and at least one second receptacle (2b) suitable for transporting at least one second container (9), each of the receptacles (2a, 2b) being arranged on the transport device (1) and each of the receptacles (2a, 2b) being adapted by means of a receptacle diameter (D, d) to a geometrical feature of the containers (9) to be received, and at least one transport plane (E) in which the containers (9) are transportable along a predefined transport path by at least one of the receptacles (2a, 2b) being provided, the at least one first receptacle (2a) being arranged zonally at a distance from the second receptacle (2b) in a direction perpendicular to the transport plane (E), the position of at least one of the receptacles (2a, 2b) being switchable into the at least one transport plane (E) of the containers (9) by means of a drive (30) or manually using switching means provided with a catch (43), the receptacle (2a, 2b) moving into the position of the other receptacle (2a, 2b) as a result of the switch, **characterised in that** the at least one first and the at least one second receptacle (2a, 2b) have different receptacle diameters (D, d) and are arranged in the same position along the perimeter of the transport device (1).

2. Transport device according to Claim 1, **characterised in that** the at least one first receptacle (2a) is associated with at least one of the second receptacles (2b) and can be switched to the position thereof for transportation of the second containers (9), the association of the at least two receptacles (2a, 2b) forming a receptacle unit (2).

3. Transport device according to Claim 1 or 2, **characterised in that** at least one of the receptacles (2a, 2b) is movable linearly during the switch.

4. Transport device according to any one of the preceding claims, **characterised in that** a drive (32) for driving the transport device (1) is provided and the drive (32) is suitable for continuous operation of the transport device (1).

5. Transport device according to any one of the preceding claims, **characterised in that** the receptacles (2) are external, clamping or internal grippers which contact the mouth of the containers (9) at least intermittently.

6. Transport device according to any one of the preceding claims, **characterised in that** the transport device (1) is a revolving star conveyor (56) on the circumference of which a plurality of first receptacles (2a) and second receptacles (2b) are arranged.

7. Transport device according to any one of the preceding claims, **characterised in that** a drive (30) for switching at least one of the receptacles (2) into the transport plane is provided and is arranged in the region of the transport device (1), the drive (30) being an electric drive, a servo motor, a linear motor, a mechanical drive, a control cam which can be advanced by a further drive, a fluid drive or a pneumatic cylinder.

8. Transport device according to any one of the preceding claims, **characterised in that** an individual drive (30) for switching the receptacle (2a, 2b) or receptacle unit (2) is assigned to each receptacle (2a, 2b) or receptacle unit (2) on the transport device (1).

9. Transport device according to any one of the preceding claims, **characterised in that** at least one of the drives (30) for switching the receptacles (2a, 2b) or receptacle units (2) is connected to a control device (81) which is adapted to switching at least one of the at least two receptacles (2a, 2b) into the transport plane (E) during operation of the transport device (1).

10. Transport device according to any one of the preceding claims, **characterised in that** there is provided an actuation device (5), in particular a control cam, arranged in a stationary manner in the direction of the transport path of the containers (9), which cam cooperates with at least one of the receptacles (2a, 2b) in order to effect active gripping or releasing of this receptacle (2).

11. Transport installation comprising a plurality of transport devices according to any one of the preceding claims, **characterised in that** a drive for switching (30) the receptacles (2) of a plurality of transport devices (1) into the transport plane (E) is provided.

12. Method for switching a transport device (1) comprising at least one first receptacle (2a) for transporting a first container (9) and at least one second receptacle (2b) for transporting a second container (9), the receptacles (2a, 2b) being adapted to the containers (9) to be transported by means of a receptacle diameter (D, d), at least the first receptacle (2a) being zonally and at least intermittently at a distance from the second receptacle (2b) in a direction perpendicular to a transport plane (E) of the containers (9), the first receptacle (2a) being switched into the at least one transport plane (E) in order to transport the containers (9) in the transport plane (E) by means of a drive (30) or manually using switching means provided with a catch (43), and the receptacle (2a, 2b) moving to the position of the other receptacle (2a, 2b) as a result of the switching, **characterised in that** the at least one first and the at least one second receptacle (2a, 2b) have different receptacle diameters (D, d) and are arranged in the same position along the perimeter of the transport device (1).

13. Method according to Claim 12, **characterised in that** the switching of at least the first receptacle (2a) or of at least one receptacle unit (2) is controlled in such a way that one of the two receptacles (2a, 2b) transports containers (9) selectively or alternately during operation of a filling plant.

14. Method according to Claim 13 or 14, **characterised in that** a plurality of first receptacles (2a) are switched simultaneously or in rapid succession during a revolution of the transport device (1) by means of at least one switching drive (30).

15. Method according to Claim 12, **characterised in that** containers (9) can be transported respectively by only one of the two receptacles (2a, 2b) fed into the transport plane (E) during an operation of the transport device (1).

## Revendications

1. Dispositif de transport (1) de réceptacles (9) en particulier d'ébauches préformées ou de bouteilles comportant au moins un premier logement de réception (2a) adapté au transport d'au moins un premier réceptacle (9) et au moins un second logement de réception (2b) adapté au transport d'au moins un second réceptacle (9), chacun de ces logements de réception (2a, 2b) étant monté sur le dispositif de transport (1) et adapté à une caractéristique géométrique du réceptacle à recevoir par un diamètre de réception (D, d), et dans lequel il est prévu au moins un plan de transport (E) dans lequel les réceptacles (9) peuvent être transportés le long d'un chemin de transport prédéfini par au moins l'un des logements de réception (2a, 2b), le premier logement de réception (2a) est positionné par zones à distance du second logement de réception (2b) dans une direction perpendiculaire au plan de transport (E), au moins l'un des logements de réception (2a, 2b) peut être déplacé dans le plan de transport (E) des réceptacles (9) par un système d'entraînement (30) ou manuellement avec des moyens de déplacement équipés d'un système d'enclenchement (43), et au déplacement un logement de réception (2a, 2b) prend respectivement la place d'un autre logement de réception (2a, 2b),
**caractérisé en ce que**
le premier et le second logements de réception (2a, 2b) ont des diamètres de réception (D, d) différents et sont situés dans la même position le long de la périphérie du dispositif de transport (1).

2. Dispositif de transport conforme à la revendication 1,
**caractérisé en ce que**
le premier logement de réception (2a) est associé à au moins un second logement de réception (2b) et peut être déplacé dans sa position pour transporter les seconds réceptacles (9), l'association de deux logements de réception (2a, 2b) formant une unité de réception (2).

3. Dispositif de transport conforme à la revendication 1 ou 2,
**caractérisé en ce qu'**
au moins l'un des logements de réception (2a, 2b) peut être déplacé linéairement lors de son déplacement.

4. Dispositif de transport conforme à l'une des revendications précédentes,
**caractérisé en ce qu'**
il est prévu un système d'entraînement (32) pour entraîner le dispositif de transport (1), et ce système d'entraînement (32) est adapté à un mode de fonctionnement continu du dispositif de transport (1).

5. Dispositif de transport conforme à l'une des revendications précédentes,
**caractérisé en ce que**
les logements de réception (2) sont constitués par une griffe externe une griffe de serrage ou une griffe externe qui vient en contact au moins par intermittence avec le goulot du réceptacle (9).

6. Dispositif de transport conforme à l'une des revendications précédentes,
**caractérisé en ce que**
le dispositif de transport (1) est constitué par un convoyeur étoile (56) à déplacement rotatif à la périphérie duquel est montée une série de premiers logements de réception (2a), et de seconds logements de réception (2b).

7. Dispositif de transport conforme à l'une des revendications précédentes,
**caractérisé en ce qu'**
il est prévu un système d'entraînement (30) pour permettre le déplacement d'au moins l'un des logements de réception (2) dans le plan de transport qui est monté dans la zone du dispositif de transport (1), ce système d'entraînement (30) étant constitué par un système d'entraînement électrique, un servomoteur, un moteur linéaire, un système d'entraînement mécanique, une came de commande réglable par un autre système d'entraînement, un système d'entraînement hydraulique ou un vérin pneumatique.

8. Dispositif de transport conforme à l'une des revendications précédentes,
**caractérisé en ce qu'**
à chaque logement de réception (2a, 2b) ou unité de réception (2) est associé sur le dispositif de transport (1) un système d'entraînement individuel (30) pour permettre le déplacement de ce logement de réception (2a, 2b) ou de cette unité de réception (2).

9. Dispositif de transport conforme à l'une des revendications précédentes,
**caractérisé en ce qu'**
au moins l'un des systèmes d'entraînement (30) permettant le déplacement des logements de réception (2a, 2b) ou des unités de réception (2) est connecté à un dispositif de commande (81) qui est adapté pour déplacer au moins l'un des au moins deux éléments de réception (2a, 2b) dans le plan de transport (E) pendant le fonctionnement du dispositif de transport (1).

10. Dispositif de transport conforme à l'une des revendications précédentes,
**caractérisé en ce qu'**
il est prévu au moins un dispositif de manoeuvre (5) en particulier une came de commande monté stationnaire en direction du chemin de transport des réceptacles (9), qui coopère avec au moins l'un des logements de réception (2a, 2b) pour permettre une prise préhension ou un dégagement actif de ce logement de réception (2).

11. Installation de transport comprenant plusieurs dispositifs de transport conforme à l'une des revendications précédentes,
**caractérisée en ce qu'**
il est prévu un système d'entraînement (30) pour permettre le déplacement des logements de réception (2) de plusieurs dispositifs de transport (1) dans le plan de transport (E).

12. Procédé de déplacement un dispositif de transport (1) comprenant au moins un premier logement de réception (2a) pour le transport d'un premier réceptacle (9) et au moins un second logement de réception (2b) pour le transport d'un second réceptacle (9), les logements de réception (2a, 2b) étant adaptés aux réceptacles (9) à transporter par un diamètre de réception (D, d), selon lequel au moins le premier logement de réception (2a) est positionné par zones et au moins par intermittence à distance du second logement de réception (2b) dans une direction perpendiculaire à un plan de transport (E) des réceptacles, le premier logement de réception (2a) peut être déplacé dans le plan de transport (E) des réceptacles (2), par un système d'entraînement (30) ou manuellement avec des moyens de déplacements équipés d'un système d'enclenchement (43), et les logements de réception (2a, 2b) prennent respectivement suite au déplacement, la position d'un autre logement de réception (2a, 2b),
**caractérisé en ce que**
le premier logement de réception et le second logement de réception (2a, 2b) ont des diamètres de réception (D, d) différents et sont situés dans la même position le long de la périphérie du dispositif de transport (1).

13. Procédé conforme à la revendication 12,
**caractérisé en ce que**
le déplacement d'au moins le premier logement de réception (2a) ou d'au moins une unité de réception (2) est commandé de sorte que, pendant le fonctionnement d'une installation de mise en bouteille, l'un des deux logements de réception (2a, 2b) transporte sélectivement ou successivement des réceptacles (9).

14. Procédé conforme à la revendication 12 ou 13,
**caractérisé en ce que**
par l'intermédiaire d'au moins un système d'entraînement de déplacement (30) plusieurs premiers logements de réception (2a) sont déplacés simultanément ou brièvement l'un après l'autre pendant une rotation du dispositif de transport (1).

15. Procédé conforme à la revendication 12,
**caractérisé en ce que**
des réceptacles (9) ne peuvent être transportés qu'avec respectivement un seul des deux logements de réception (2a, 2b) positionnés dans le plan de transport (E) pendant un fonctionnement du dispositif de transport (1).
